(19) **Europäisches Patentamt**
**European Patent Office**
**Office européen des brevets**

(11) **EP 2 516 100 B1**

(12) **FASCICULE DE BREVET EUROPEEN**

(45) Date de publication et mention de la délivrance du brevet:
**27.05.2015 Bulletin 2015/22**

(21) Numéro de dépôt: **10796388.6**

(22) Date de dépôt: **22.12.2010**

(51) Int Cl.:
*B23K 26/03* (2006.01)　　*B23K 26/16* (2006.01)
*B23K 26/08* (2014.01)　　*B23K 26/14* (2014.01)
*B23K 26/00* (2014.01)　　*B23K 26/06* (2014.01)
*B23K 26/36* (2014.01)　　*B08B 7/00* (2006.01)
*B08B 15/04* (2006.01)

(86) Numéro de dépôt international:
**PCT/EP2010/070484**

(87) Numéro de publication internationale:
**WO 2011/076844 (30.06.2011 Gazette 2011/26)**

(54) **PROCEDE D'ABLATION D'UNE SURFACE EN TROIS DIMENSIONS GRACE A UN DISPOSITIF D'ABLATION LASER ET GRACE A L'EMPLOI D'UNE ETAPE D'ETALONNAGE ; DISPOSITIF DE MISE EN OEUVRE D'UN TEL PROCEDE**

VERFAHREN ZUR ABLATION EINER DREIDIMENSIONALEN OBERFLÄCHE UNTER VERWENDUNG EINER LASERABLATIONSVORRICHTUNG UND DURCH DIE VERWENDUNG EINES KALIBIRERUNGSSCHRITTS, VORRICHTUNG ZUR IMPLEMENTIERUNG SOLCH EINES VERFAHRENS

METHOD OF ABLATING A THREE-DIMENSIONAL SURFACE USING A LASER ABLATION DEVICE AND THROUGH THE USE OF A CALIBRATION STEP; DEVICE FOR IMPLEMENTING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2009 FR 0959411**

(43) Date de publication de la demande:
**31.10.2012 Bulletin 2012/44**

(73) Titulaire: **Commissariat à l'Énergie Atomique et aux Énergies Alternatives
75015 Paris (FR)**

(72) Inventeurs:
• **CHAMPONNOIS, François**
 **F-91440 Bures Sur Yvette (FR)**
• **LAVAL, Bertrand**
 **F-75015 Paris (FR)**

(74) Mandataire: **Regimbeau
20, rue de Chazelles
75847 Paris Cedex 17 (FR)**

(56) Documents cités:
**US-A1- 2004 144 760　　US-A1- 2006 103 839
US-A1- 2007 173 792　　US-A1- 2007 173 796
US-A1- 2009 220 349　　US-A1- 2009 224 178**

Printed by Jouve, 75001 PARIS (FR)

**Description**

La présente invention concerne un procédé d'ablation d'une surface en trois dimensions grâce à un dispositif d'ablation, le dispositif comportant :

- une source laser pour générer un faisceau laser pulsé ;
- un objectif permettant de faire varier le point focal du faisceau laser selon une profondeur z;
- une tête galvanométrique pour diriger, selon des axes définissant un plan (X, Y), le faisceau sur la surface à ablater ;
- une lentille f-thêta permettant d'imager le faisceau laser sur une surface plane au lieu d'une surface sphérique ;
- au moins une caméra d'observation de la surface à ablater ; et
- une commande reliée au moins à la tête galvanométrique, à l'objectif et à la camera (voir, par example, US 2007/173792 A).

L'invention concerne également un dispositif de mise en oeuvre du procédé précité

ETAT DE L'ART

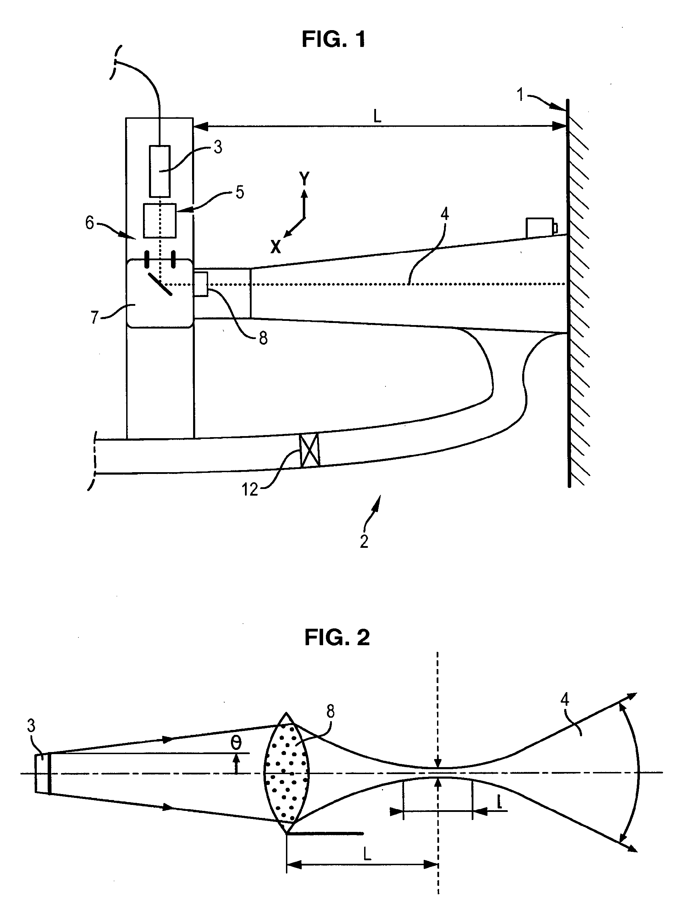

Comme le montre la figure 1, une solution connue pour effectuer l'ablation d'une surface 1, par exemple pour la restauration de façades de bâtiments ou pour la décontamination d'installations nucléaires, consiste à utiliser l'ablation laser.

L'ablation laser consiste à retirer une couche d'épaisseur réduite du matériau à enlever (de la poussière, de la peinture, ou un contaminant par exemple), via l'interaction d'une lumière, cohérente, focalisée et issue d'un laser pulsé, avec ce matériau.

L'échauffement rapide de la surface de cette couche provoque la vaporisation puis l'éjection des premières strates du matériau.

Des dispositifs 2 d'ablation laser connus comportent typiquement une source 3 laser prévue pour générer un faisceau 4 laser pulsé et des moyens de transport de ce faisceau jusqu'à un module 6 optique situé en aval de la source 3 laser, et qui est pourvu d'un objectif 5, d'une tête 7 galvanométrique et d'une lentille 8 f-thêta pour focaliser et diriger selon les axes X et Y le faisceau pulsé sur la surface 1 à ablater. Le dispositif comporte 2 également un avaloir 13 et un tube d'évacuation 12 pour l'évacuation des matériaux ablatés.

En sortie de l'objectif 5 et de la tête galvanométrique 7, les coordonnées du point de focalisation sont situées sur une surface sphérique, ce qui peut compliquer une commande du faisceau. Pour s'affranchir de cette difficulté, la lentille f-thêta 8 est disposée sur le trajet du faisceau laser, de manière à situer le point de focalisation sur une surface plane.

Il s'agit d'apporter une quantité d'énergie suffisante sur la couche pour atteindre le seuil d'ablation de celle-ci. Mais ce n'est pas le seul effet qu'apporte un faisceau laser sur la couche. En effet, au moment de l'impact laser, une onde de choc est créée et contribue à désolidariser le matériau de la surface 1 sur laquelle il est appliqué.

On a représenté schématiquement sur la figure 2 la forme classique d'un faisceau 4.

La fluence, ou densité d'énergie (J/m$^2$), nécessaire pour déclencher l'ablation du matériau, dépend de la nature de celui-ci, de l'épaisseur que l'on souhaite ablater et de la composition de la surface.

Les expériences montrent qu'il faut une fluence de 1 à 50 J/cm$^2$. Par conséquent, la quantité d'énergie transmise dépend de la quantité d'énergie transportée par le faisceau 4 et de la section de ce faisceau interagissant avec le matériau à traiter. La plus petite section du faisceau est située à la distance de focalisation L, distance L à laquelle se situe le point d'ablation préférentiel (voir également figure 1). Elle est de l'ordre de 50 cm à partir de la lentille 8 par exemple.

Comme le montre la figure 2, le faisceau 4 a une profondeur l de champ importante, correspondant à la distance de Rayleigh, soit environ 1 cm, permettant ainsi de travailler sur des surfaces en s'affranchissant des défauts de planéité de celle-ci. Le dispositif est donc bien adapté pour les surfaces en deux dimensions.

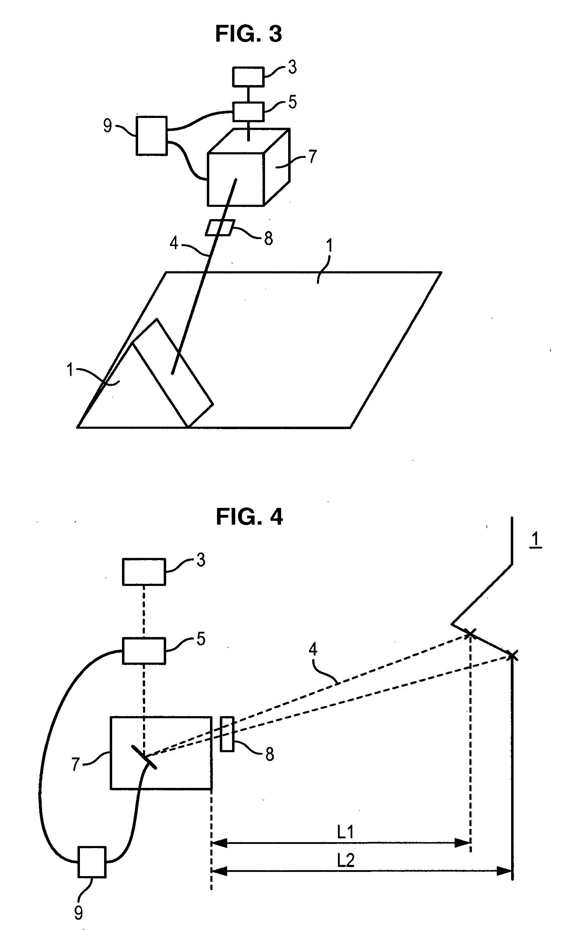

Lorsque l'on souhaite effectuer une ablation sur une surface 1 en trois dimensions, comme le montre la figure 3, un objectif 5 à focale variable doit être associé à la source laser 3 pour corriger la distance L de focalisation.

Comme le montre la figure 4 également, en modifiant la distance L de focalisation, de manière dynamique grâce à une commande 9, il est possible de piloter la distance d'ablation sur une surface 1 en trois dimensions.

Les techniques précédentes connues présentent cependant des inconvénients.

La surface en trois dimensions doit être préalablement mémorisée dans la commande 9 pour pouvoir être prise en compte par le dispositif.

Il n'est pas possible d'effectuer une ablation sur une surface non connue préalablement, et déterminée préalablement par des dispositifs supplémentaires de détermination de la surface, comme par exemple des théodolites, des interféromètres, des capteurs conoscopiques, etc.

De plus, les dispositifs supplémentaires de détermination d'une surface en trois dimensions de l'état de l'art, nécessaires à la détermination préalable de la surface, sont chers et encombrants, et ne conviennent pas aux applications d'ablation de surfaces.

Enfin, les dispositifs supplémentaires ne travaillent pas dans le même référentiel que le dispositif d'ablation, ce qui génère des distorsions, puisque le dispositif supplémentaire n'a pas la même vision de la surface à ablater que le dispositif d'ablation, et peut générer des erreurs de positionnement du faisceau laser.

On connait de US 2007/173792 une technique de qualification et de calibration d'un système laser, selon laquelle on qualifie et/ou on calibre le système laser en fonction d'une déviation dans un plan d'un faisceau laser, par rapport à une direction souhaitée, observée par un système d'imagerie.

On connait de US 2004/144760 une technique d'étalonnage d'un marquage laser sur une face opposée à une face observée par un système d'imagerie.

On connait de US 2009/220349 une technique de triangulation d'une surface en trois dimensions, par un système d'imagerie éclairant également la surface, le système étant distinct d'un dispositif d'ablation de la surface.

## PRESENTATION DE L'INVENTION

On propose selon l'invention de pallier au moins un de ces inconvénients.

A cet effet, on propose selon l'invention un procédé d'ablation selon la revendication 1.

L'invention est avantageusement complétée par les caractéristiques des revendications 2 à 9, prises seules ou en une quelconque de leur combinaison techniquement possible.

L'invention concerne également un dispositif de mise en oeuvre du procédé précité, defini dans la revendication 10.

L'invention présente de nombreux avantages.

La surface en trois dimensions n'a pas à être préalablement connue pour pouvoir être prise en compte par la commande : l'invention permet d'effectuer une ablation sur une surface non connue préalablement.

De plus, l'invention ne nécessite pas l'utilisation de dispositifs supplémentaires de détermination d'une surface en trois dimensions. L'invention utilise uniquement des éléments du dispositif d'ablation, qui ont par conséquent le même référentiel, et ne génèrent ainsi aucune distorsion.

De ce fait, le dispositif est moins cher et moins encombrant, ce qui convient aux applications d'ablation de surfaces.

## PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1, déjà commentée, représente schématiquement un dispositif d'ablation connu ;
- la figure 2, déjà commentée, représente schématiquement un faisceau laser connu d'ablation ;
- les figures 3 et 4, déjà commentées, représentent schématiquement l'ablation d'une surface en trois dimensions ;
- la figure 5 représente schématiquement les principales étapes d'un procédé selon l'invention ;
- la figure 6 représente schématiquement un exemple possible d'un dispositif de mise en oeuvre d'un procédé selon l'invention ;
- la figure 7 représente schématiquement le principe de triangulation ;
- la figure 8 représente schématiquement la détermination des coordonnées sx et sy dans un plan de référence d'une tête, par une commande selon l'invention ;
- la figure 9 représente schématiquement la détermination des coordonnées px et py dans un plan de référence d'une matrice d'une caméra, par une commande selon l'invention ;
- la figure 10 représente schématiquement les principales étapes d'une étape d'étalonnage selon l'invention ;
- la figure 11 représente schématiquement une succession de plaques vues de dessus, avec une plaque de travers (en pointillés) pour montrer les tolérances admissibles ;
- la figure 12 représente schématiquement des courbes de mise en correspondance de px en fonction de sx, pour différentes profondeurs z ;
- la figure 13 représente schématiquement respectivement des courbes de mise en correspondance de a, b et c en fonction de px ;
- la figure 14 représente schématiquement une courbe de relation de z en fonction de c ;
- les figures 15 et 16 représentent schématiquement les principales étapes d'une étape de détermination de la forme en trois dimensions de la surface à ablater ;
- la figure 17 représente schématiquement les principales étapes d'alignement du faisceau laser de la tête 7 sur l'axe optique de la tête.

- la figure 18 représente schématiquement les principales étapes de mise en orthogonalité de la matrice par rapport au plan (xOz) ;
- la figure 19 représente schématiquement une étape d'interpolation par la commande lors de l'étape de détermination de la forme en trois dimensions de la surface à ablater ;
- la figure 20 représente schématiquement un dispositif comportant deux caméras.

Sur l'ensemble des figures, les éléments similaires portent des références numériques identiques.

DESCRIPTION DETAILLEE

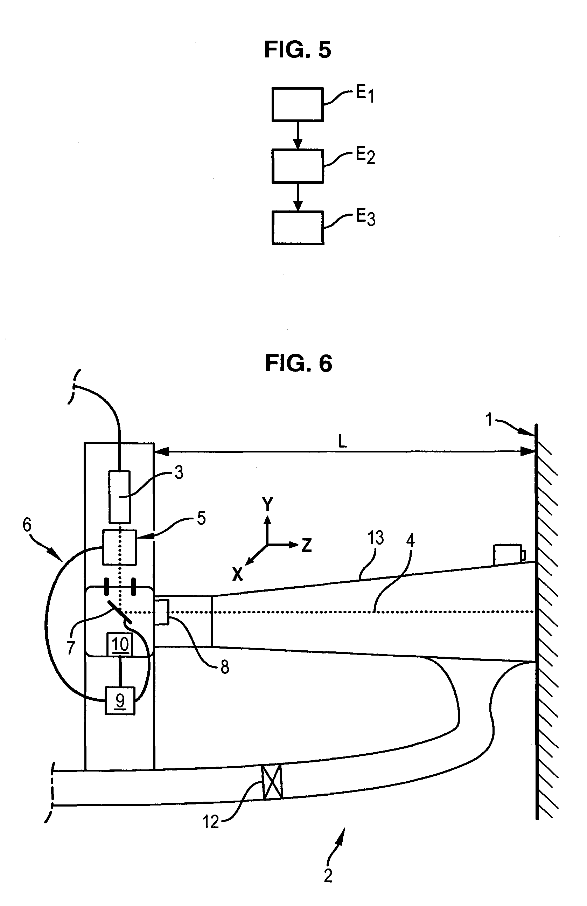

Les figures 5 et 6 représentent schématiquement les principales étapes d'un procédé d'ablation d'une surface 1 en trois dimensions, mises en oeuvre sur un dispositif 2 d'ablation.
Le dispositif 2 comporte classiquement :

- une source 3 laser pour générer un faisceau 4 laser pulsé ;
- un objectif 5 de réglage du point de focalisation du faisceau laser 4 selon une profondeur z ;
- une tête 7 galvanométrique pour diriger, selon des axes définissant un plan (X, Y), le faisceau 4 sur la surface 1 à ablater ;
- une lentille f-thêta 8 qui situe le point focal sur une surface plane ;
- au moins une caméra 10 d'observation de la surface à ablater.

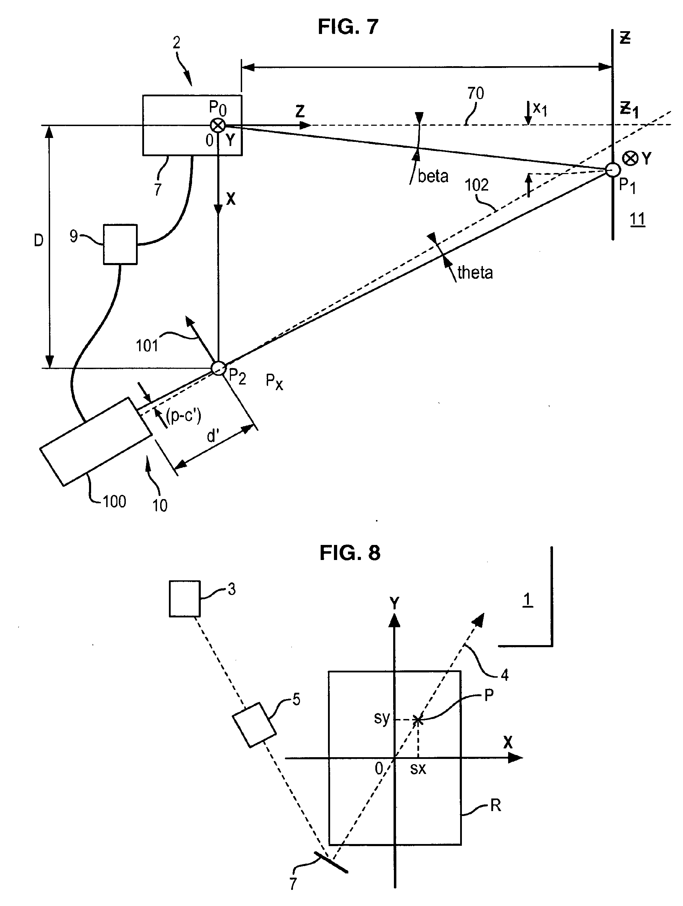

La source 3 est par exemple un laser impulsionnel à fibre, de faible puissance (par exemple 20 W de puissance moyenne à une cadence de 20kHz, soit 1 mJ par impulsion laser), avec une bonne qualité de faisceau ($M^2$ = 1.5), ce qui signifie que la section d'interaction faisceau/matière est suffisamment petite pour atteindre la fluence d'ablation précitée. Le point d'impact a un diamètre de 30 à 200 $\mu$m.
L'objectif 5, la tête 7 et la lentille 8 forment un module optique référencé par 6 sur la figure 6. La lentille 8 peut également être indépendante du module 6.
La tête 7 comporte classiquement un jeu de deux miroirs dont la rotation est motorisée. Chacun de ces miroirs permet de dévier le faisceau laser suivant les deux axes X et Y avec un mouvement très rapide du faisceau (jusqu'à 7 m/s à une distance focale de 160 mm).
La lentille f-thêta 8 est disposée en aval (dans le sens de propagation du faisceau laser) de la tête 7 de manière à situer le point focal du faisceau laser sur une surface plane. Cette lentille f-thêta 8 fixe le point focal initial du faisceau laser en l'absence de toute commande.
Comme le montre la figure 7, la caméra 10 est par exemple une caméra de faible définition comportant une matrice 100 du type CCD (512x512 avec des pixels d'environ 8 $\mu$m de côté). Cette taille de pixel est largement suffisante pour l'application souhaitée : une incertitude de 1 pixel induit une erreur sur la profondeur z de la surface 1 de l'ordre du centième de mm. Pour un objectif 101 de la caméra 10 de 8 mm, l'incertitude précitée induit une erreur angulaire de l'ordre de six centièmes de degré. Pour un objectif 101 de 16 mm, l'erreur d'angle précitée mesurée est de l'ordre de trois centièmes de degré.
Le dispositif 2 comporte en outre une commande 9 reliée d'une part au module 6, c'est-à-dire au moins à l'objectif 5, et à la tête 7 galvanométrique, et d'autre part à la caméra 10. L'objectif 5 et la tête 7 sont entièrement pilotés par la commande 9. A cet effet, la commande 9 comporte tous les moyens classiques de mémoire, de commande et de traitement des données.
La figure 5 montre schématiquement que le procédé comporte principalement :

- une étape E1 d'étalonnage du dispositif 2,
- une étape E2 de détermination de la forme en trois dimensions de la surface 1 à ablater, à partir de l'étape d'étalonnage E1, par triangulation, et
- une étape E3 d'ablation de la surface en trois dimensions, selon laquelle la commande 9 commande le module 6, à savoir au moins l'objectif 5 et la tête galvanométrique 7, en fonction de la forme déterminée de la surface, pour focaliser et diriger, selon des axes définissant un plan (X, Y) et selon une profondeur z, le faisceau 4 sur la surface 1 à ablater.

Les développements qui suivent montrent que l'étape E1 d'étalonnage permet l'étape E2 de triangulation.
Comme le montre la figure 7, le dispositif 2 utilise le principe de la triangulation pour mesurer la profondeur z d'un point P1 à traiter sur la surface 1 à ablater.
Par triangulation dans le triangle (P0, P1, P2), connaissant par construction la distance D entre la caméra 10 (P2) et la tête 7 (P0), et par mesure des deux angles beta et theta, la commande 9 peut remonter à la profondeur en z du point éclairé P1, grâce à la relation connue de l'homme du métier :

$$z = \frac{D}{\dfrac{1}{\tan(\dfrac{\pi}{2} - beta)} + \dfrac{1}{\tan(\dfrac{\pi}{4} + theta)}}$$

L'ensemble matrice 100/objectif 101 permet de mesurer l'angle theta que fait le faisceau image du point éclairé P1 avec l'axe optique 102 de l'objectif 101.

Connaissant la distance d' entre le centre optique P2 (en considérant que l'on peut approximer l'objectif 101 à une lentille mince) de l'objectif 101 et le centre c' de la matrice 100 de la caméra, ainsi que la distance (p-c') séparant le pixel éclairé p et le pixel central de la matrice c', la commande 9 calcule l'angle theta par la formule de trigonométrie suivante :

$$theta = \arctan(\frac{p - c'}{d'}).$$

En utilisant la tête galvanométrique 7, la commande 9 peut remonter à l'angle beta que fait le faisceau laser objet avec l'axe optique 70 de la tête 7 galvanométrique, par la formule trigonométrique suivante :

$$beta = \arctan(\frac{x1}{z1})$$

Comme on le voit sur la figure 7, dans un même plan de focalisation de profondeur z, les points d'une ligne verticale (selon l'axe Y) ont les mêmes paramètres de triangulation (D, beta et theta) si et seulement si les deux points de référence de la triangulation P0 (tête 7) et P2 (caméra 10) sont dans le plan contenant l'axe optique de la tête 7 (xOz). Dans le plan de profondeur z, on différencie deux points selon l'axe Y uniquement par leurs coordonnées respectives sur l'axe Y, et P1 est la projection orthogonale du point que la commande souhaite mesurer le long de l'axe Y sur le plan (xOz).

C'est donc uniquement la position suivant l'axe X du point recherché qui va permettre à la commande 9 de déterminer la profondeur z par triangulation.

En conclusion, si par construction du dispositif 2 le triangle (P0, P1, P2) est dans le plan (xOz) (à savoir la caméra 10 est correctement positionnée par rapport à la tête 7), les variations du système de triangulation induites par une variation de position suivant l'axe Y du point mesuré sont éliminées.

Par ailleurs, comme le montre la figure 8, la trajectoire du faisceau laser 4 passant par la tête galvanométrique 7 est totalement définie par les deux coordonnées (sx, sy) du point P d'intersection du faisceau 4 avec un plan R de référence de la tête 7. Le plan R de référence de la tête 7 est le plan orthogonal à l'axe optique 70 dans lequel tous les points ont leurs coordonnées connues de la tête 7 (dans un carré dont la taille est limitée par les caractéristiques du système optique 8 f-théta).

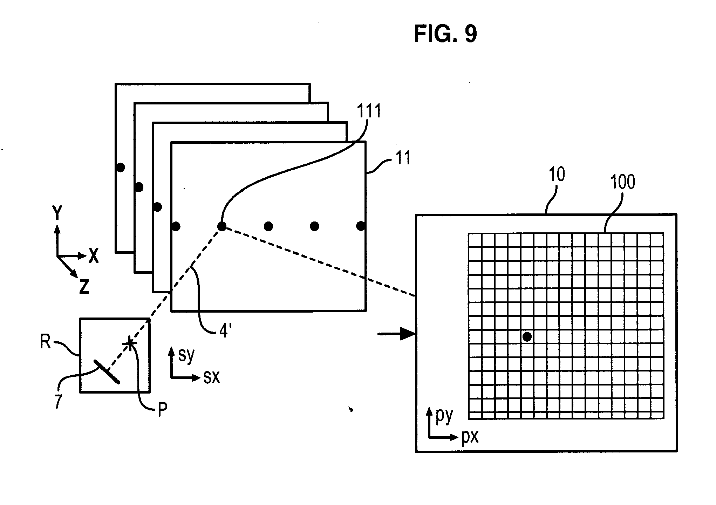

Par ailleurs également, et comme le montre la figure 9, on appelle px la position réellement observée et mesurée suivant l'axe X sur la matrice 100, par exemple CCD, de la caméra 10, et correspondant à la position x où il se trouve effectivement sur un plan 11 de focalisation z qui intercepte un faisceau laser 4'.

En revenant à la figure 7, on rappelle qu'un point mesuré est défini par D, beta et theta. Les paramètres qui varient dans le système de mesure, lorsque le point P1 (projection orthogonale du point mesuré sur le plan (xOz)) bouge, sont :

- la coordonnée sx selon l'axe X du point à mesurer dans le plan R de référence de la tête galvanométrique 7 ;
- la profondeur z du plan de focalisation dans lequel se trouve le point P1 ;
- la coordonnée px selon l'axe X de l'image de ce point sur la matrice 100 de la caméra 10.

Or pour un point de profondeur z, il existe un et un seul couple (sx, px), et l'étape E1 d'étalonnage consiste pour la commande 9 à trouver les correspondances qui lient chaque couple de point (sx, px) à z. La profondeur z étant la grandeur que la commande 9 souhaite trouver, la commande 9 doit déterminer la relation qui, à partir de sx, permet d'éclairer le point x de l'objet que l'on souhaite mesurer, et de la mesure px faite par la caméra 10 du point éclairé, permette à la commande 9 de remonter à z.

Ainsi, pour un plan de focalisation de profondeur z connue, la commande mesure une pluralité couples de points (sx, px), et représente les courbes px(sx) pour différents plans de focalisation à plusieurs z.

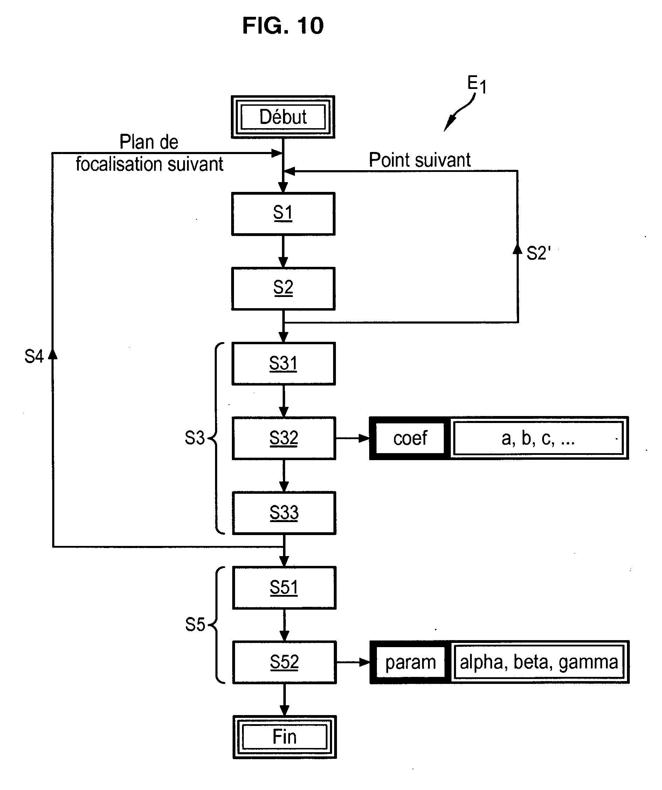

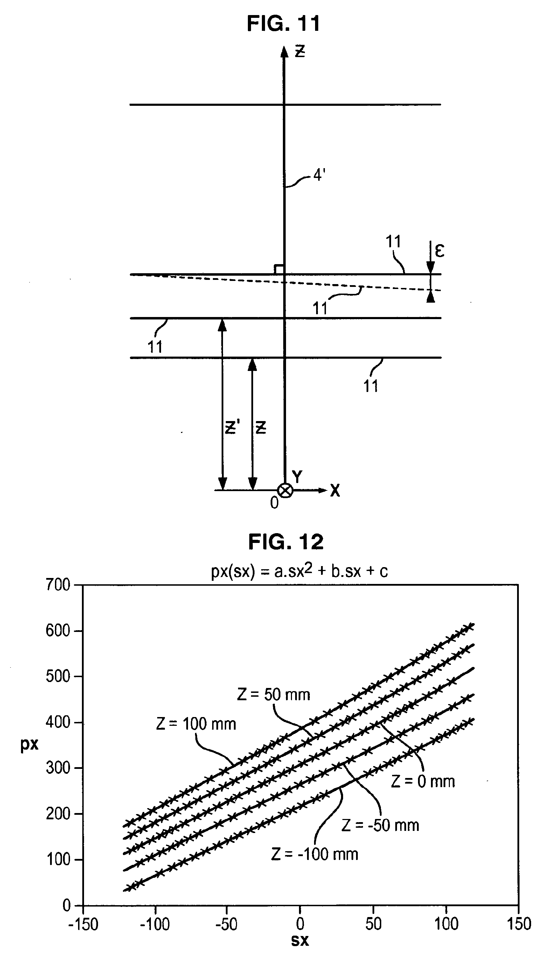

A cet effet, et comme le montre la figure 10 en combinaison avec la figure 9, l'étape E1 d'étalonnage comporte une étape S1 selon laquelle, le module 6, plus précisément la tête galvanométrique 7, éclaire un point 111 d'une plaque d'étalonnage 11, située à une profondeur z, grâce à un faisceau 4'. La coordonnée sx est donc connue de la commande 9, grâce à la tête galvanométrique 7. Cette profondeur z doit être connue avec une précision meilleure que la distance I de Rayleigh, de préférence inférieure à un dixième de cette distance. De même, l'erreur ε de parallélisme de cette plaque d'étalonnage 11 avec le plan (xOy) ne doit pas excéder un dixième de la distance I de Rayleigh, comme le montre la figure 11.

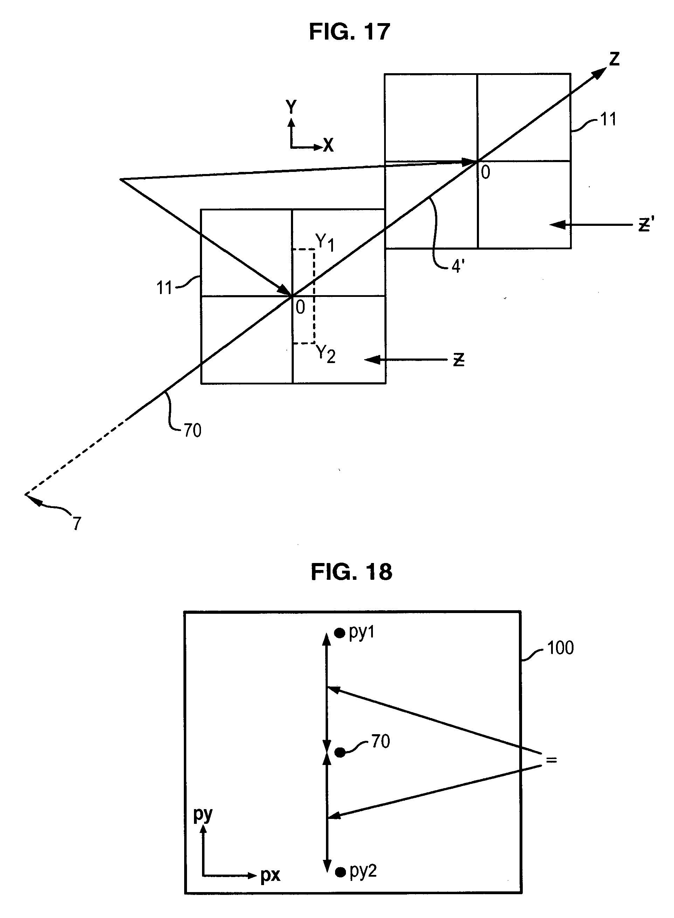

Dans ces conditions, les plaques 11 doivent être suffisamment planes et suffisamment grande pour intercepter le faisceau laser 4' sur l'ensemble du domaine atteignable par celui-ci, quelle que soit la profondeur en z de la plaque 11. La plaque d'étalonnage 11 est représentée schématiquement sur les figures 11 et 17.

Le faisceau 4' est le faisceau laser d'ablation utilisé à puissance réduite, ou un faisceau auxiliaire d'alignement (par exemple un laser HeNe) de la source 3, disponible, par construction, sur la source 3, et colinéaire à la source 3. La puissance du faisceau 4' est réduite car il n'est pas nécessaire d'effectuer une ablation de la plaque d'étalonnage 11, mais uniquement un éclairage qui puisse éclairer chaque point 111, de sorte que chaque point 111 puisse être observé par la caméra 10, comme expliqué ci-après.

Lors d'une étape S2, la caméra 10 observe ladite plaque d'étalonnage 11 et le point 111 éclairé. La commande 9 détermine alors la coordonnée px observée sur la matrice 100 de la caméra 10.

Lors d'une étape S2', la tête 7 du module 6 déplace selon lesdits axes X, Y le faisceau 4' sur la mire 11, pour éclairer une pluralité de points 111 déterminés de la plaque d'étalonnage 11.

La pluralité de points 111 déterminés de la plaque d'étalonnage 11 sont répartis selon des lignes continues ou pointillées, et/ou des colonnes continues ou pointillées.

Lorsque le nombre de points 111 est suffisant (de l'ordre de 5 par exemple), la commande passe à une étape S3.

Lors de l'étape S3, la commande 9 établit une correspondance entre :

- d'une part la position d'éclairage sx de chacun des points éclairés 111 de la plaque d'étalonnage 11 à la profondeur z, et

- d'autre part la position observée px par la caméra 10 des points éclairés.

A cet effet, la commande 9 trace, lors d'une étape S31 comprise dans S3, la courbe :

$$px = f(sx).$$

Des exemples de ces courbes sont représentés à la figure 12 (courbes avec des croix). On constate que ces courbes peuvent être approximées par un polynôme du second degré.

Lors d'une étape S32, la commande 9 détermine ensuite, à partir de la courbe de l'étape S31, les coefficients a, b et c reliant px et sx sous la forme d'un polynôme du second degré tel que :

$$px(sx) = a \cdot sx^2 + b \cdot sx + c \quad \text{(EQ1)}.$$

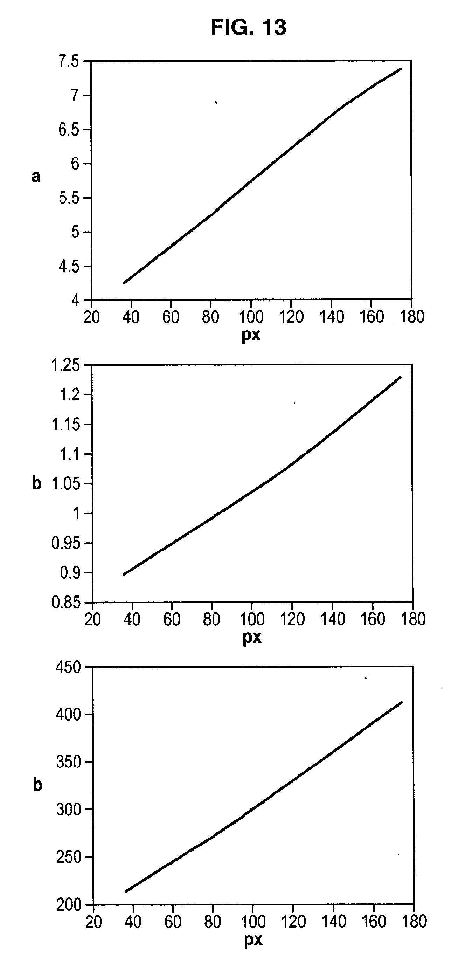

Cette approximation est possible car, comme le montre la figure 13, a, b et c sont sensiblement des fonctions linéaires de sx.

Lors d'une étape S33, la commande 9 trace la courbe correspondante (en trait plein sur la figure 12).

Lors d'une étape S4, les étapes S1, S2, S2' et S3 décrites précédemment sont reprises pour une autre profondeur z et la plaque d'étalonnage 11 est donc placée à un autre z. La reprise des étapes S1, S2, S2' et S3 permet une pluralité d'éclairages S1 par le module 6, une pluralité d'observations S2 par la caméra 10 et une pluralité d'établissements de correspondances S3 par la commande 9.

La commande 9 dispose donc d'un réseau de courbes comme représenté sur la figure 12, chaque courbe correspondant à une profondeur z donnée.

Lorsque le nombre de profondeurs z est suffisant (de l'ordre de 5 par exemple), la commande ç passe à une étape S5.

On rappelle que pour tracer une des courbes de la figure 12, cinq couples de points (sx, px) par exemple sont mis en correspondance, pour chaque profondeur z de la plaque d'étalonnage 11. Le faisceau 4' est par exemple projeté en (coordonnées en sx en mm) :

-120, -60, 0, 60 et 120,

sur chacune des profondeurs z de la plaque d'étalonnage 11.

De même, les mesures sont effectuées pour cinq profondeurs z, à savoir par exemple (coordonnées en z en mm, mesurée grâce à une règle graduée par exemple) :

-100, -50, 0, 50 et 100.

Le plan de focalisation de coordonnée en z 0 mm est le plan de référence de la tête galvanométrique 7.

Lors d'une étape S5, la commande 9 détermine une relation entre les correspondances.

A cet effet, lors d'une étape S51 comprise dans l'étape S5, la commande 9 trace la courbe :

$$z = g(c).$$

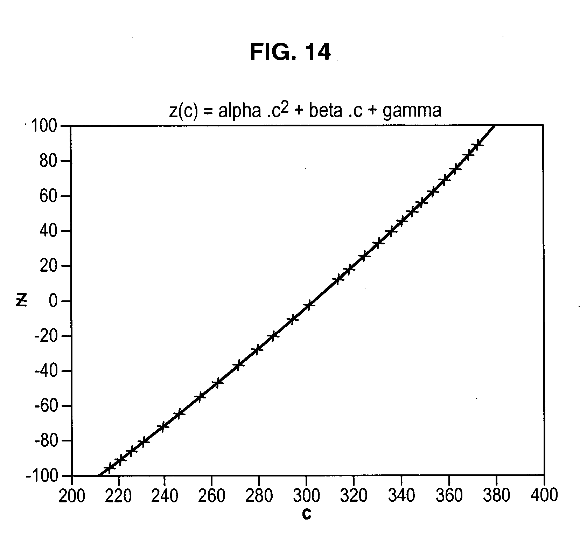

Un exemple d'une telle courbe est représenté en figure 14 (courbe avec des croix).

On constate que cette courbe peut être approximée par un polynôme du second degré.

Lors d'une étape S52, la commande détermine ainsi les paramètres $\alpha$, $\beta$ et $\gamma$ reliant tous les couples z et c ainsi déterminés précédemment sous la forme d'un polynôme du second degré tel que :

$$z(c) = \alpha \cdot c^2 + \beta \cdot c + \gamma \qquad \text{(EQ2)}.$$

La commande 9 peut donc alors tracer la courbe correspondante (en trait plein sur la figure 14).

L'étape d'étalonnage E1 grâce à la plaque d'étalonnage 11 est alors terminée.

En revenant à la figure 5, le procédé comporte également une étape E2 de détermination de la forme en trois dimensions de la surface 1 à ablater, à partir de l'étape d'étalonnage E1, par triangulation.

Les développements qui suivent concernent l'étape E2.

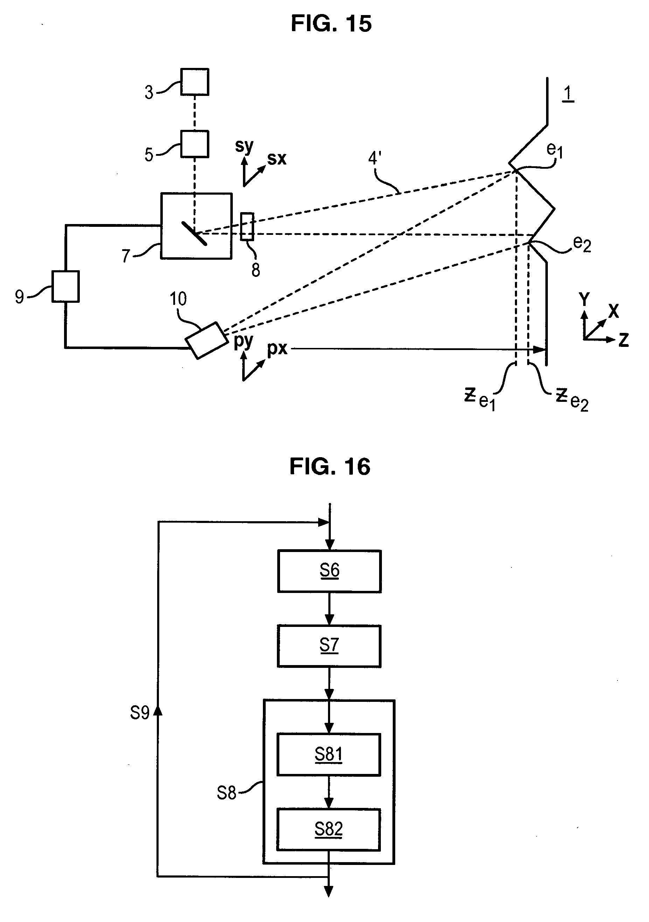

En référence aux figures 15 et 16, pour l'étape E2 de détermination de la forme en trois dimensions de la surface 1, la tête galvanométrique 7, c'est-à-dire le module 6, éclaire, lors d'une étape S6 un point e de la surface 1 à ablater. L'éclairage s'effectue, de même que pour l'étape E1, grâce à un faisceau 4' de puissance réduite.

Lors de l'étape S6, la commande 9 détermine donc la coordonnée sxe selon l'axe X, grâce à la tête galvanométrique 7.

Lors d'une étape S7, la caméra 10 observe la surface 1.

La commande 9 détermine alors la coordonnée pxe observée sur la matrice 100 de la caméra 10.

Lors d'une étape S8, la commande 9 détermine la forme en trois dimensions de la surface 1 grâce aux correspondances établies par la commande 9 lors de l'étape d'étalonnage E1.

Ainsi, lors d'une étape S81, comprise dans l'étape S8, la commande 9 détermine la valeur ce grâce aux valeurs pxe et sxe par la formule :

$$ce = pxe - a \cdot sxe^2 - b \cdot sxe \qquad \text{(EQ3)}$$

en utilisant les coefficients a et b déterminés par la commande 9 lors de l'étape E1 d'étalonnage.

Les coefficients a et b sont choisis par la commande 9 comme indiqué ci-dessous.

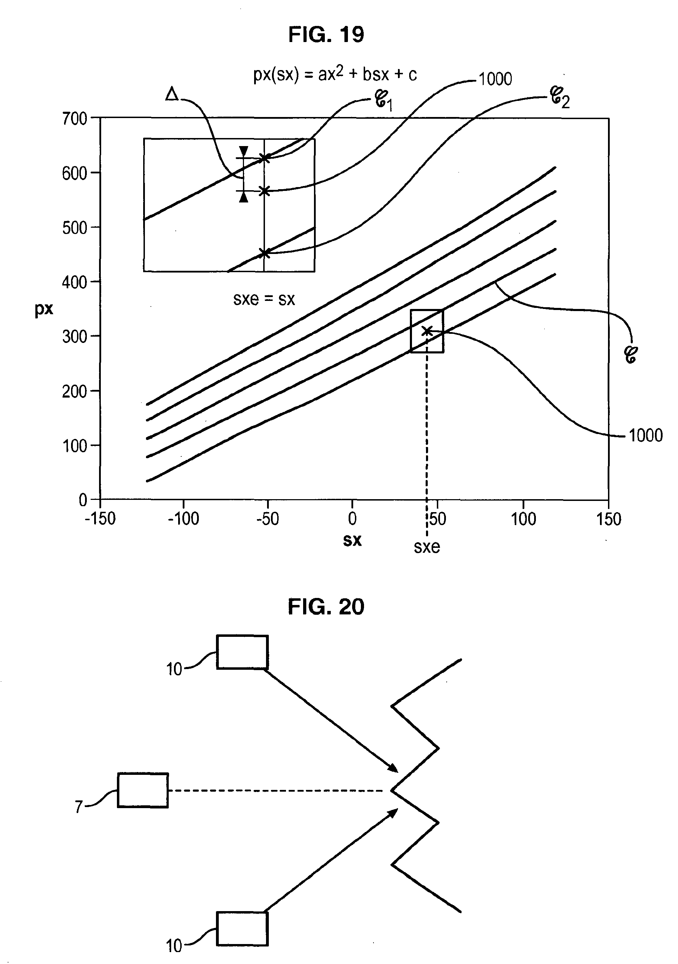

Comme le montre la figure 19, à l'issue de l'étape S4 de l'étape E1, la commande 9 dispose d'un réseau de courbes C représentées en traits pleins sur la figure 19. Chaque courbe C correspond à des valeurs des coefficients a, b et c différentes.

Or, pendant les étapes S6 et S7 de E2, la commande 9 détermine sxe et pxe (représenté par une croix 1000 sur la figure 19).

Pour choisir les bonnes valeurs de a et b dans (EQ3), la commande 9 effectue une interpolation Δ.

La commande 9 calcule et stocke la coordonnée px des points appartenant aux courbes C du réseau d'étalonnage de la figure 19 et ayant leur coordonnée sx identique à celle sxe du point recherché. Dans un deuxième temps, par une série de tests successifs, la commande 9 va déterminer la courbe C1 du réseau d'étalonnage qui se trouve juste au-dessus du point à mesurer. S'il n'y a pas de courbe au-dessus de ce point, la commande 9 prend la courbe C2 qui se trouve juste en dessous. Enfin la commande 9 utilise la relation (EQ3) correspondant à la courbe déterminée, avec les valeurs de a et b correspondantes.

De plus, lors d'une étape S82, également comprise dans l'étape S8, la commande 9 détermine la profondeur ze par la formule :

$$ze = \alpha \cdot ce^2 + \beta \cdot ce + \gamma \qquad (EQ4)$$

en utilisant les paramètres $\alpha$, $\beta$ et $\gamma$ déterminés par la commande 9 lors de l'étape E1 d'étalonnage.

Comme le montre la figure 15, pour chaque point e1 éclairé par le faisceau 4' sur la surface 1, la commande 9 peut déterminer la profondeur ze1 associée.

Comme l'indique l'étape S9 de la figure 16, les étapes S6, S7 et S8 décrites précédemment sont reprises pour autant de points de la surface que désiré, en fonction de la précision souhaitée de détermination de la surface 1. L'écart maximal selon les axes X et Y entre deux points de mesure successifs dépend de la distance de Rayleigh du faisceau laser utilisé et de la variation maximale selon la profondeur z observée sur la surface 1 à ablater.

On n'a représenté sur la figure 15 que deux exemples e1 et e2, pour ze1 et ze2. La commande 9 détermine ainsi la forme en trois dimensions de la surface 1 grâce aux correspondances établies par la commande 9 lors de l'étape d'étalonnage.

L'étape E2 de détermination de la forme en trois dimensions de la surface 1 à ablater est donc terminée.

En revenant à la figure 5, le procédé comporte également une étape E3 d'ablation de la surface en trois dimensions, selon laquelle la commande 9 commande le module 6 en fonction de la forme déterminée de la surface, pour focaliser et diriger, selon des axes définissant un plan (X, Y) et selon une profondeur z, le faisceau 4 sur la surface 1 à ablater.

On se rapproche ici de l'ablation connue de l'homme du métier, et cette étape n'est pas décrite plus en détail dans la suite de la présente description.

Cependant, pour l'étape E3 d'ablation, la commande 9 commande avantageusement le module 6 pour focaliser et diriger le faisceau 4 sur tous les points de la surface 1 à ablater, selon des profondeurs z successives. De cette façon, la commande 9 commande un nombre de fois moindre le module 6, et peut donc gagner du temps pour l'ablation. La commande 9 commande le module 6 de sorte que tous les points à ablater situés à la même profondeur z soient traités, avant de traiter les points de la surface 1 situés à une autre profondeur.

Comme le montre la figure 20, le dispositif comporte avantageusement deux caméras 10, ce qui permet d'avoir une meilleure connaissance de la surface 1 à ablater, ce qui permet le cas échéant d'avoir une meilleure ablation, si le faisceau 4 peut avoir accès aux zones observées par les caméras bien entendu (ablation de zones non observées dans le cas d'une seule caméra).

Les développements qui suivent concernent les réglages à effectuer pour avoir une meilleure précision pour l'étape E1 d'étalonnage du dispositif 2.

On rappelle que la tête 7 et la caméra 10 doivent être dans le même plan (xOz) (voir figure 7). La plaque d'étalonnage 11 doit être parallèle au plan (xOy) avec une tolérance maximale admissible inférieure à la distance I de Rayleigh du faisceau laser utilisé, préférentiellement meilleure qu'un dixième de cette distance. Si toutefois une telle tolérance était dépassée, la commande 9 pourrait effectuer une correction de la position observée px par la caméra 10 des points éclairés, pour compenser les effets de la distorsion.

La tête 7 est paramétrée de sorte qu'elle pointe le faisceau laser sur le centre de son plan de référence R, pour définir son axe optique 70. Le faisceau de la tête 7 doit être dans un plan (xOz). Un actionneur simple et connu de l'homme du métier permet de déplacer la plaque d'étalonnage 11 de référence le long de l'axe optique de la tête. Comme le montre la figure 17, le faisceau laser 4' de la tête 7 est aligné sur l'axe optique 70, s'il coupe les deux plans z et z' au même point O.

Une fois que l'axe optique 70 est dans le plan (xOz), les points P0 et P1 étant, avec le paramétrage ci-dessus (le point P1 est l'intersection de l'axe optique 70 avec la plaque d'étalonnage 11), situés sur l'axe 70, les deux points P0 et P1 sont donc situés dans le même plan (xOz)..

De plus, le centre de la matrice 100 et le centre P2 de l'objectif 101 sont sensiblement placés sur la même droite que P1. Le triangle défini par les points (P0, P1, P2) est ainsi placé dans le même plan (xOz).

Pour s'assurer que la matrice 100 est orthogonale au plan (xOz), et comme le montrent les figures 17 et 18, la tête 7 éclaire un point donné de coordonnée y1 suivant l'axe Y sur la plaque d'étalonnage 11. Par un traitement d'image, la commande 9 mesure la coordonnée py1 pixelique suivant l'axe Y du point image sur la matrice 100 de la caméra 10. Toujours sur la plaque d'étalonnage 11 à la même profondeur z, la tête 7 éclaire un second point de même coordonnée en x, mais de coordonnée y2 opposée à la précédente en y. De la même manière, la commande 9 mesure la coordonnée py2 pixelique en y sur la matrice 100. Si cette coordonnée est l'opposée de celle du premier point par rapport au point central de la 100, alors la matrice 100 est orthogonale au plan (xOz).

**Revendications**

1. Procédé d'ablation d'une surface (1) en trois dimensions grâce à un dispositif (2) d'ablation, le dispositif (2) comportant :

    - une source (3) laser pour générer un faisceau (4) laser pulsé ;
    - un module (6) optique pour focaliser et diriger, selon des axes définissant un plan (X, Y) et selon une profondeur (z), le faisceau (4) sur la surface (1) à ablater ;
    - au moins une caméra (10) d'observation de la surface à ablater ; et
    - une commande (9) reliée au module (6) et à la caméra (10) ;

    le procédé étant **caractérisé en ce qu'**il comporte

    - une étape (E1) d'étalonnage du dispositif (2) selon laquelle

        - le module (6) éclaire (S1, S2') selon lesdits axes (X, Y) une plaque (11) d'étalonnage, située à une profondeur (z), pour éclairer une pluralité de points (111) déterminés de la plaque d'étalonnage (11), tandis que la caméra (10) observe (S2) ladite plaque d'étalonnage (11), la commande (9) établissant (S3) une correspondance entre d'une part la position d'éclairage (sx) de chacun des points éclairés (111) de la plaque d'étalonnage (11) à la profondeur (z) et d'autre part la position observée (px) par la caméra (10) des points éclairés ;

        la plaque d'étalonnage (11) étant successivement positionnée (S4) à une pluralité de profondeurs (z) pendant l'étape d'étalonnage, pour permettre une pluralité d'éclairages (S1) par le module (6), d'observations (S2) par la caméra (10) et d'établissements de correspondances (S3) par la commande (9) ;
        la commande (9) établit (S5) une relation entre les correspondances,
    - une étape (E2) de détermination de la forme en trois dimensions de la surface (1) à ablater, à partir de l'étape d'étalonnage (E1), par triangulation, et
    - une étape (E3) d'ablation de la surface en trois dimensions, selon laquelle la commande (9) commande le module (6) en fonction de la forme déterminée de la surface, pour focaliser et diriger, selon des axes définissant un plan (X, Y) et selon une profondeur (z), le faisceau (4) sur la surface (1) à ablater.

2. Procédé selon la revendication 1, dans lequel, pour l'établissement, pour chaque profondeur z, de la correspondance entre

    - d'une part la position d'éclairage sx de chacun des points éclairés (111) de la plaque d'étalonnage (11) à ladite profondeur z, et
    - d'autre part la position observée px par la caméra (10),

    lors de l'étape (E1) d'étalonnage, la commande (9) détermine (S3) les coefficients a, b et c reliant px et sx sous la forme d'un polynôme du second degré tel que :

    $$px(sx) = a \cdot sx^2 + b \cdot sx + c \quad \text{(EQ1)} ;$$

    et
    la commande (9) détermine (S5) également les paramètres $\alpha$, $\beta$ et $\gamma$ reliant tous les couples z et c ainsi déterminés précédemment sous la forme d'un polynôme du second degré tel que :

    $$z(c) = \alpha \cdot c^2 + \beta \cdot c + \gamma \quad \text{(EQ2)}.$$

3. Procédé selon la revendication 2, dans lequel, pour l'étape (E1) d'étalonnage, la pluralité de points (111) déterminés de la plaque d'étalonnage (11) sont répartis selon des lignes continues ou pointillées, et/ou des colonnes continues ou pointillées.

4. Procédé selon l'une des revendications 2 ou 3, dans lequel au moins cinq couples (sx, px) sont mis en correspondance pour chaque profondeur z de la plaque d'étalonnage (11), pour l'étalonnage, la plaque d'étalonnage (11) étant mise à au moins cinq profondeurs (z) différentes.

5. Procédé selon l'une des revendications 1 à 4, dans lequel la commande (9) effectue une correction de la position observée (px) par la caméra (10) des points éclairés, pour compenser les effets de la distorsion.

6. Procédé selon l'une des revendications 1 à 5, dans lequel, pour l'étape (E2) de détermination de la forme en trois dimensions de la surface (1), le module (6) éclaire (S6) selon lesdits axes (X, Y) la surface (1) à ablater, pour éclairer une pluralité de points (sxe) déterminés de la surface (1), tandis que la caméra (10) observe (S7) la surface (1) et ainsi les points éclairés (pxe), la commande (9) déterminant (S8) la forme en trois dimensions de la surface (1) grâce aux correspondances et la relation établies par la commande (9) lors de l'étape d'étalonnage.

7. Procédé selon l'une des revendications 2 à 6, dans lequel, pour l'étape (E2) de détermination de la forme en trois dimensions de la surface (1), à partir de la position observée pxe sur la caméra (10) des points éclairés sxe par le module (6), la commande (9) détermine (S81) la valeur ce grâce aux valeurs pxe et sxe par la formule :

$$ce = pxe - a \cdot sxe^2 - b \cdot sxe \qquad \text{(EQ3)}$$

en utilisant les coefficients a et b déterminés par la commande (9) lors de l'étape (E1) d'étalonnage,
puis détermine (S82) la profondeur ze par la formule :

$$ze = \alpha \cdot ce^2 + \beta \cdot ce + \gamma \qquad \text{(EQ4)}$$

en utilisant les paramètres $\alpha$, $\beta$ et $\gamma$ déterminés par la commande (9) lors de l'étape (E1) d'étalonnage.

8. Procédé selon la revendication 6, dans lequel la commande (9) effectue une interpolation de pxe et sxe grâce aux coefficients a et b déterminés lors de l'étape d'étalonnage (E1).

9. Procédé selon l'une des revendications 1 à 8, dans lequel, pour l'étape (E3) d'ablation, la commande (9) commande le module (6) pour focaliser et diriger le faisceau (4) sur la surface (1) à ablater selon des profondeurs (z) successives.

10. Dispositif (2) comportant :

   - une source (3) laser pour générer un faisceau (4) laser pulsé ;
   - un module (6) optique pour focaliser et diriger, selon des axes définissant un plan (X, Y) et selon une profondeur (Z), le faisceau (4) sur une surface (1) en trois dimensions à ablater ;
   - au moins une caméra (10) d'observation de la surface à ablater ;

   ledit dispositif (2) étant **caractérisé en ce qu'**il comporte en outre une commande (9) reliée au module (6) et à la caméra (10), et adaptée pour la mise en oeuvre d'un procédé d'ablation comportant :

   - une étape (E1) d'étalonnage du dispositif (2) selon laquelle

      - le module (6) éclaire (S1, S2') selon lesdits axes (X, Y) une plaque (11) d'étalonnage, située à une profondeur (z), pour éclairer une pluralité de points (111) déterminés de la plaque d'étalonnage (11), tandis que la caméra (10) observe (S2) ladite plaque d'étalonnage (11), la commande (9) établissant (S3) une correspondance entre d'une part la position d'éclairage (sx) de chacun des points éclairés (111) de la plaque d'étalonnage (11) à la profondeur (z) et d'autre part la position observée (px) par la caméra (10) des points éclairés ;

la plaque d'étalonnage (11) étant successivement positionnée (S4) à une pluralité de profondeurs (z) pendant l'étape d'étalonnage, pour permettre une pluralité d'éclairages (S1) par le module (6), d'observations (S2) par la caméra (10) et d'établissements de correspondances (S3) par la commande (9) ;

la commande (9) établit (S5) une relation entre les correspondances,

- une étape (E2) de détermination de la forme en trois dimensions de la surface (1) à ablater, à partir de l'étape d'étalonnage (E1), par triangulation, et

- une étape (E3) d'ablation de la surface en trois dimensions, selon laquelle la commande (9) commande le module (6) en fonction de la forme déterminée de la surface, pour focaliser et diriger, selon des axes définissant un plan (X, Y) et selon une profondeur (z), le faisceau (4) sur la surface (1) à ablater.

**Patentansprüche**

1. Verfahren zum Abtragen einer dreidimensionalen Oberfläche (1) durch eine Abtragungsvorrichtung (2), wobei die Vorrichtung Folgendes umfasst:

   - eine Laserquelle (3), um ein gepulstes Laserbündel (4) zu erzeugen,
   - ein optisches Modul (6), um gemäß Achsen, die eine Ebene (X, Y) definieren, und gemäß einer Tiefe (z) das Bündel (4) auf die abzutragende Fläche (1) zu fokussieren und zu richten;
   - mindestens eine Kamera (10) zur Beobachtung der abzutragenden Fläche; und
   - eine Steuerung (9), die mit dem Modul (6) und mit der Kamera (10) verbunden ist;

   wobei das Verfahren **dadurch gekennzeichnet ist, dass** es Folgendes umfasst:

   - einen Schritt (EI) des Kalibrierens der Vorrichtung (2), gemäß dem

     - das Modul (6) gemäß den Achsen (X, Y) eine Kalibrierungsplatte (11) erleuchtet (S1, S2'), die sich in einer Tiefe (z) befindet, um eine Vielzahl von bestimmten Punkten (111) der Kalibrierungsplatte (11) zu erleuchten, während die Kamera (10) die Kalibrierungsplatte (11) beobachtet (S2), wobei die Steuerung (9) eine Übereinstimmung zwischen einerseits der Beleuchtungsposition (sx) jedes der erleuchteten Punkte (111) der Kalibrierungsplatte (11) in der Tiefe (z) und andererseits der von der Kamera (10) beobachteten Position (px) der beleuchteten Punkte festsetzt (S3)
     wobei die Kalibrierungsplatte (11) aufeinander folgend in einer Vielzahl von Tiefen (z) während des Schritts des Kalibrierens positioniert ist (S4), um eine Vielzahl von Beleuchtungen (S1) durch das Modul (6), von Beobachtungen (S2) durch die Kamera (10) und von Festsetzungen von Übereinstimmungen (S3) durch die Steuerung (9) zu ermöglichen;

   die Steuerung (9) eine Beziehung zwischen den Übereinstimmungen festsetzt (S5),
   - einen Schritt (E2) des Bestimmens der dreidimensionalen Form der abzutragenden Fläche (1), ausgehend vom Schritt des Kalibrierens (E1), durch Triangulierung, und
   - einen Schritt (E3) des Abtragens der dreidimensionalen Oberfläche, gemäß dem die Steuerung (9) das Modul (6) je nach der bestimmten Form der Fläche steuert, um gemäß den Achsen, die eine Ebene (X, Y) definieren, und gemäß einer Tiefe (z) das Bündel (4) auf die abzutragende Fläche (1) zu fokussieren und zu richten.

2. Verfahren nach Anspruch 1, wobei für die Festsetzung für jede Tiefe z der Übereinstimmung zwischen

   - einerseits der Position der Beleuchtung sx jedes der beleuchteten Punkte (111) der Kalibrierungsplatte (11) in der Tiefe z und
   - andererseits der von der Kamera (10) beobachteten Position px

   während des Schrittes (E1) des Kalibrierens die Steuerung (9) die Koeffizienten a, b und c bestimmt (S3), die px und sx in Form eines Polynoms des zweiten Grads verbinden, wie:

$$px(sx) = a \cdot sx^2 + b \cdot sx + c \text{ (EQ1)};$$

und
die Steuerung (9) auch die Parameter α, β und γ bestimmt (S5), die alle Paare z und c verbinden, die so zuvor in Form eines Polynoms des zweiten Grads festgesetzt wurden, wie

$$z(c) = \alpha \cdot c^2 + \beta \cdot c + \gamma \qquad (EQ2).$$

3. Verfahren nach Anspruch 2, wobei beim Schritt (E1) des Kalibrierens die Vielzahl von bestimmten Punkten (111) der Kalibrierungsplatte (11) gemäß durchgehender oder gepunkteter Linien und/oder durchgehender oder gepunkteter Säulen verteilt sind.

4. Verfahren nach einem der Ansprüche 2 oder 3, wobei mindestens fünf Paare (sx, px) für jede Tiefe z der Kalibrierungsplatte (11) in Übereinstimmung gebracht werden, wobei für die Kalibrierung die Kalibrierungsplatte (11) in mindestens fünf verschiedenen Tiefen (z) angeordnet ist.

5. Verfahren nach einem der Ansprüche 1 bis 4, wobei die Steuerung (9) eine Korrektur der von der Kamera (10) beobachteten Position (px) der beleuchteten Punkte durchführt, um die Effekte der Verzerrung zu kompensieren.

6. Verfahren nach einem der Ansprüche 1 bis 5, wobei beim Schritt (E2) des Bestimmens der dreidimensionalen Form der Fläche (1) das Modul (6) gemäß den Achsen (X, Y) die abzutragende Fläche (1) beleuchtet (S6), um eine Vielzahl von bestimmten Punkten (sxe) der Fläche (1) zu beleuchten, während die Kamera (10) die Fläche (1) und somit die beleuchteten Punkte (pxe) beobachtet (S7), wobei die Steuerung (9) die dreidimensionale Form der Fläche (1) dank den Übereinstimmungen und der Beziehung bestimmt (S8), die von der Steuerung (9) während des Schritts des Kalibrierens festgesetzt werden.

7. Verfahren nach einem der Ansprüche 2 bis 6, wobei beim Schritt (E2) des Bestimmens der dreidimensionalen Form der Fläche (1) ausgehend von der auf der Kamera (10) beobachteten Position pxe der durch das Modul (6) beleuchteten Punkte sxe die Steuerung (9) den Wert ce dank der Werte pxe und sxe durch die folgende Formel bestimmt (S81):

$$ce = pxe - a \cdot sxe^2 - b \cdot sxe \qquad (EQ3).$$

unter Verwendung der Koeffizienten a und b, bestimmt durch die Steuerung (9) während des Schritts (E1) des Kalibrierens,
dann die Tiefe ze durch die folgende Formel bestimmt (S82):

$$ze = \alpha \cdot ce^2 + \beta \cdot ce + \gamma \qquad (EQ4)$$

unter Verwendung der Parameter α, β und γ, die von der Steuerung (9) während des Schritts (E1) des Kalibrierens bestimmt werden.

8. Verfahren nach Anspruch 6, wobei die Steuerung (9) eine Interpolation von pxe und sxe dank der Koeffizienten a und b durchführt, die während des Schritts des Kalibrierens (E1) bestimmt werden.

9. Verfahren nach einem der Ansprüche 1 bis 8, wobei beim Schritt (E3) des Abtragens die Steuerung (9) das Modul (6) steuert, um das Bündel (4) auf der abzutragenden Fläche (1) gemäß aufeinander folgenden Tiefen (z) zu fokussieren und zu richten.

10. Vorrichtung (2), umfassend:

   - eine Laserquelle (3), um ein gepulstes Laserbündel (4) zu erzeugen,

- ein optisches Modul (6), um gemäß Achsen, die eine Ebene (X, Y) definieren, und gemäß einer Tiefe (Z) das Bündel (4) auf eine abzutragende dreidimensionale Fläche (1) zu fokussieren und zu richten;
- mindestens eine Kamera (10) zur Beobachtung der abzutragenden Fläche; und

wobei die Vorrichtung (2) **dadurch gekennzeichnet ist, dass** sie außerdem eine Steuerung (9) umfasst, die mit dem Modul (6) und mit der Kamera (10) verbunden und ausgelegt ist, um ein Verfahren des Abtragens durchzuführen, das Folgendes umfasst:

- einen Schritt (E1) des Kalibrierens der Vorrichtung (2), gemäß dem

- das Modul (6) gemäß den Achsen (X, Y) eine Kalibrierungsplatte (11) erleuchtet (S1, S2'), die sich in einer Tiefe (z) befindet, um eine Vielzahl von bestimmten Punkten (111) der Kalibrierungsplatte (11) zu erleuchten, während die Kamera (10) die Kalibrierungsplatte (11) beobachtet (S2), wobei die Steuerung (9) eine Übereinstimmung festsetzt (S3) zwischen einerseits der Beleuchtungsposition (sx) jedes der erleuchteten Punkte (111) der Kalibrierungsplatte (11) in der Tiefe (z) und andererseits der von der Kamera (10) beobachteten Position (px) der beleuchteten Punkte,

wobei die Kalibrierungsplatte (11) aufeinander folgend in einer Vielzahl von Tiefen (z) während des Schritts des Kalibrierens positioniert ist (S4), um eine Vielzahl von Beleuchtungen (S1) durch das Modul (6), von Beobachtungen (S2) durch die Kamera (10) und von Festsetzungen von Übereinstimmungen (S3) durch die Steuerung (9) zu ermöglichen,
die Steuerung (9) eine Beziehung zwischen den Übereinstimmungen festsetzt (S5),
- einen Schritt (E2) des Bestimmens der dreidimensionalen Form der abzutragenden Fläche (1), ausgehend vom Schritt des Kalibrierens (E1), durch Triangulierung, und
- einen Schritt (E3) des Abtragens der dreidimensionalen Fläche, gemäß dem die Steuerung (9) das Modul (6) je nach der bestimmten Form der Fläche steuert, um gemäß Achsen, die eine Ebene (X, Y) definieren, und gemäß einer Tiefe (z) das Bündel (4) auf die abzutragende Fläche (1) zu fokussieren und zu richten.

## Claims

1. Method for the ablation of a three-dimensional surface (1) by means of an ablation device (2), the device (2) comprising:

   - a laser source (3) for generating a pulsed laser beam (4);
   - an optical module (6) for focusing and aiming, along axes defining a plane (X, Y) and along a depth (z), the beam (4) on the surface (1) to be ablated;
   - at least one camera (10) for observing the surface to be ablated; and
   - a control (9) connected to the module (6) and to the camera (10);

   the method being **characterised in that** it comprises

   - a step (E1) for calibrating the device (2) wherein

     - the module (6) illuminates (S1, S2') along said axes (X, Y) a calibration plate (11), located at a depth (z), to illuminate a plurality of defined points (111) of the calibration plate (11), while the camera (10) observes (S2) said calibration plate (11), the control (9) determining (S3) a correspondence between, on one hand, the illumination position (sx) of each of the illuminated points (111) of the calibration plate (11) at the depth (z) and, on the other, the position (px) observed by the camera (10) of the illuminated points;

     the calibration plate (11) being successively positioned (S4) at a plurality of depths (z) during the calibration step, to enable a plurality of illuminations (S1) by the module (6), observations (S2) by the camera (10) and determinations of correspondences (S3) by the control (9);
     the control (9) determines (S5) a relationship between the correspondences.
   - a step (E2) for determining the three-dimensional shape of the surface (1) to be ablated, on the basis of the calibration step (E1), by triangulation, and
   - a step (E3) for the ablation of the three-dimensional surface, whereby the control (9) controls the module (6) on the basis of the determined shape of the surface, to focus and aim, along axes defining a plane (X, Y) and along a depth (z), the beam (4) on the surface (1) to be ablated.

2. Method according to claim 1, wherein, for determining, for each depth z, the correspondence between

- on one hand, the illumination position sx of each of the illuminated points (111) of the calibration plate (11) at the depth z and
- on the other, the position px observed by the camera (10),

during the calibration step (E1), the control (9) determines (S3) the coefficients a, b and c linking px and sx in the form of a polynomial of the second degree such that:

$$px(sx) = a \cdot sx^2 + b \cdot sx + c \quad (EQ1);$$

and
the control (9) also determines (S5) the parameters $\alpha$, $\beta$ and $\gamma$ linking all the pairs z and c as determined above in the form of a polynomial of the second degree such that:

$$z(c) = \alpha \cdot c^2 + \beta \cdot c + \gamma \quad (EQ2).$$

3. Method according to claim 2, wherein, for the calibration step (E1), the plurality of defined points (111) of the calibration plate (11) are distributed along continuous or dotted rows, and/or continuous or dotted columns.

4. Method according to any of claims 2 or 3, wherein at least five pairs (sx, px) are put into correspondence for each depth z of the calibration plate (11), for the calibration, the calibration plate (11) being placed at at least five different depths (z).

5. Method according to any of claims 1 to 4, wherein the control (9) performs a correction of the position (px) observed by the camera (10) of the illuminated points, to compensate for the effects of distortion.

6. Method according to any of claims 1 to 5, wherein, for the step (E2) for determining the three-dimensional shape of the surface (1), the module (6) illuminates (S6) along said axes (X, Y) of the surface (1) to be ablated, to illuminate a plurality of defined points (111) of the surface (1), while the camera (10) observes (S7) the surface (1) and thus the illuminated points (pxe), the control (9) determining (S8) the three-dimensional shape of the surface (1) by means of the correspondences and the relationship determined by the control (9) during the calibration step.

7. Method according to any of claims 2 to 6, wherein, for the step (E2) for determining the three-dimensional shape of the surface (1) on the basis of the position pxe observed on the camera (10) of the points sxe illuminated by the module (6), the control (9) determines (S81) the value by means of the values pxe and sxe using the formula:

$$ce = pxe - a \cdot sxe^2 - b \cdot sxe \quad (EQ3)$$

using the coefficients a and b determined by the control (9) during the calibration step (E1),
and then determines (S82) the depth ze using the formula:

$$ze = \alpha \cdot ce^2 + \beta \cdot ce + \gamma \quad (EQ4)$$

using the parameters $\alpha$, $\beta$ and $\gamma$ determined by the control (9) during the calibration step (E1).

8. Method according to claim 6, wherein the control (9) performs an interpolation of pxe and sxe using the coefficients a and b determined during the calibration step (E1).

9. Method according to any of claims 1 to 8, wherein, for the ablation step (E3), the control (9) controls the module (6) to focus and aim the beam (4) on the surface (1) to be ablated along successive depths (z).

10. Device (2) comprising:

- a laser source (3) for generating a pulsed laser beam (4);
- an optical module (6) for focusing and aiming, along axes defining a plane (X, Y) and along a depth (z), the beam (4) on a three-dimensional surface (1) to be ablated;
- at least one camera (10) for observing the surface to be ablated;

said device (2) being **characterised in that** it further comprises a control (9) connected to the module (6) and to the camera (10), and suitable for implementing an ablation method comprising:

- step (E1) for calibrating the device (2) whereby

- the module (6) illuminates (S1, S2') along said axes (X, Y) a calibration plate (11), situated at a depth (z), to illuminate a plurality of defined points (111) of the calibration plate (11), while the camera (10) observes (S2) said calibration plate (11), the control (9) determining (S3) a correspondence between, on one hand, the illumination position (sx) of each of the illuminated points (111) of the calibration plate (11) at the depth (z) and, on the other, the position (px) observed by the camera (10) of the illuminated points;

the calibration plate (11) being successively positioned (S4) at a plurality of depths (z) during the calibration step, to enable a plurality of illuminations (S1) by the module (6), observations (S2) by the camera (10) and determinations of correspondences (S3) by the control (9);
the control (9) determines (S5) a relationship between the correspondences.
- a step (E2) for determining the three-dimensional shape of the surface (1) to be ablated, on the basis of the calibration step (E1), by triangulation, and
- a step (E3) for the ablation of the three-dimensional surface, wherein the control (9) controls the module (6) on the basis of the shape determined of the surface, to focus and aim, along axes defining a plane (X, Y) and along a depth (z), the beam (4) on the surface (1) to be ablated.

## FIG. 1

## FIG. 2

## FIG. 3

## FIG. 4

**FIG. 5**

**FIG. 6**

**FIG. 7**

**FIG. 8**

EP 2 516 100 B1

# FIG. 9

# FIG. 10

## FIG. 11

## FIG. 12

$$px(sx) = a.sx^2 + b.sx + c$$

## FIG. 13

# FIG. 14

z(c) = alpha .c$^2$ + beta .c + gamma

# FIG. 15

# FIG. 16

## FIG. 17

## FIG. 18

## FIG. 19

$$px(sx) = ax^2 + bsx + c$$

## FIG. 20

**EP 2 516 100 B1**

## RÉFÉRENCES CITÉES DANS LA DESCRIPTION

**Documents brevets cités dans la description**

- US 2007173792 A
- US 2004144760 A
- US 2009220349 A